# FASCICULE DE BREVET EUROPEEN

(11) **EP 3 313 164 B1**
(45) Date de publication et mention de la délivrance du brevet: **22.05.2019**
(21) Numéro de dépôt: 16733702.1
(22) Date de dépôt: 17.06.2016
(51) Int. Cl.: A01B 59/048, A01B 59/06, A01B 63/108

(54) **DISPOSITIF DE RELEVAGE AVANT POUR ENGIN AGRICOLE ET PROCÉDÉ DE COMMANDE ASSOCIÉ**
FRONTHUBVORRICHTUNG FÜR EINE LANDWIRTSCHAFTLICHE MASCHINE UND ZUGEHÖRIGES STEUERUNGSVERFAHREN
FRONT LIFTING DEVICE FOR AN AGRICULTURAL MACHINE AND ASSOCIATED CONTROL METHOD

(30) Priorité: 23.06.2015 FR 1555773
(43) Date de publication de la demande: 02.05.2018
(73) Titulaire: Defrancq, Hubert, 02190 Guignicourt (FR)
(72) Inventeur: Defrancq, Hubert, 02190 Guignicourt (FR)
(74) Mandataire: IPAZ
(86) Numéro de dépôt international: PCT/IB2016/053604
(87) Numéro de publication internationale: WO 2016/207767

(56) Documents cités:
- WO-A2-2010/049896
- DE-A1-102009 016 571
- US-B1- 6 230 817

## Description

La présente invention se rapporte au domaine des engins techniques et concerne en particulier un dispositif d'attelage et de relevage d'outil agricole, propre à être monté sur un engin agricole, et plus particulièrement à l'avant de l'engin. La présente invention s'étend également au procédé de commande d'un tel dispositif.

Les dispositifs d'attelage et de relevage sont conçus avec une course de relevage conforme aux définitions des standards internationaux pour assurer un fonctionnement sûr et une compatibilité avec les différents outils associés, y compris ceux entraînés par prise de force.

Cependant lorsque ces outils ne sont pas utilisés il est souvent souhaité de pouvoir escamoter les bras qui s'étendent vers l'avant afin de réduire leur déport longitudinal et d'éviter d'exposer des parties saillantes de ces bras pour réduire les dommages en cas de choc frontal.

Une solution communément utilisée et détaillée dans le document FR 2688378 consiste à équiper les dispositifs d'attelage et de relevage de bras repliables. Cependant cette solution complexifie et fragilise la structure. De plus elle n'autorise pas une possibilité d'oscillation assurant le suivi de relief transversal tout en portant l'outil.

Une autre solution est proposée dans le brevet GB2439709 qui décrit un brancard inférieur muni d'éléments de liaison pouvant être verrouillés dans deux positions : course haute autorisant le repliement et course basse correspondant au mode d'utilisation du relevage avec des outils. De plus un vérin d'assistance permet le mouvement, sans effort physique, du brancard inférieur lors du passage du mode de course basse au mode de course haute. Cependant cette solution présente deux limites importantes :
- il faut manuellement déverrouiller des axes pour passer d'une position à l'autre et cette opération peut être rendue délicate en raison des jeux d'alignement ou des grippages d'axes dans leur support;
- cette solution ne règle pas le problème du fonctionnement des dispositifs d'attelage et de relevage à bras autorisant un mouvement d'oscillation transversale tout en portant l'outil.

Le document EP 0182091 décrit un dispositif d'attelage et de relevage avant pour tracteur dans lequel, en position de travail, chaque bras est relié à un levier, commandé par un vérin à l'aide d'une biellette sensiblement verticale, dont la longueur peut être ajustée manuellement. Lorsqu'aucun outil n'est porté par le relevage, il est possible de libérer la biellette du levier et de relever le bras en position effacée sensiblement verticale. Toutes ces opérations doivent être effectuées manuellement et prennent du temps.

Le document WO2010/049896 décrit un dispositif d'attelage et de relevage avant comportant un premier et un second vérin « en série » et coaxiaux entre eux. Le passage de la position d'attelage à la position de travail s'effectue avec le déploiement du premier vérin tandis que le passage de la position de travail en position escamotée s'effectue avec le déploiement du second vérin. Cette solution, bien que performante présente un certain coût puisqu'elle double le nombre de vérins et nécessite de plus une coordination dans l'alimentation de chacun des vérins, afin de n'autoriser que les passages de positions prédéfinis.

C'est pourquoi, l'invention propose un dispositif d'attelage et de relevage avant à la fois plus simple, et donc moins coûteux et plus fiable.

Plus précisément l'invention a pour objet un dispositif d'attelage et de relevage d'outil, propre à être monté sur un engin agricole, comprenant :
- un châssis destiné à être fixé sur l'engin agricole,
- au moins un premier bras articulé sur le châssis et doté en l'une de ses extrémités d'un premier moyen d'attelage de l'outil;
- au moins un premier vérin dont l'un des éléments, cylindre ou tige, est relié au châssis tandis que l'autre élément, tige ou cylindre, est relié au bras, ledit vérin permettant d'assurer le mouvement du bras de sorte que l'étendue de la course du vérin permet à l'extrémité du bras doté du moyen d'attelage, de balayer successivement une première position dite « position basse minimale », une seconde position dite « position haute maximale » et une troisième position dite « escamotée »,
- des moyens d'alimentation du vérin,
- des moyens de détection de la position de l'extrémité du bras doté du moyen d'attelage aptes à désactiver les moyens d'alimentation du vérin, lorsque l'extrémité du bras a atteint la seconde position,
- une commande de by-pass apte à activer les moyens d'alimentation du vérin, lorsque lesdits moyens sont désactivés par les moyens de détection de la position de l'extrémité du bras.

Selon un certain mode de réalisation, les moyens de détection de la position de l'extrémité du bras comprennent un capteur inductif.

Alternativement, les moyens de détection de la position de l'extrémité du bras comprennent un capteur de position angulaire.

Selon une réalisation préférentielle, la commande de by-pass est un interrupteur à deux positions, dont l'une instable.

Les moyens d'alimentation peuvent comprendre un distributeur hydraulique relié à chacune des chambres du premier vérin au moyen d'une ligne, ainsi qu'une première valve interposée dans la ligne connectée à la chambre dont l'alimentation permet le passage depuis la position basse minimale jusqu'à la position escamotée, la fermeture de ladite valve étant pilotée par les moyen de détection de la position de l'extrémité du bras et son ouverture par la commande de by-pass

Le distributeur hydraulique peut être à commande manuelle depuis la cabine, le bouton de la commande de by-pass étant alors de manière préférentielle à proximité.

Les moyens d'alimentation peuvent comprendre un distributeur hydraulique relié à chacune des chambres du premier vérin au moyen d'une ligne, ledit distributeur étant commandé par une unité de commande asservie aux moyens de détection et à la commande de by-pass.

Le bouton d'actionnement de la commande de by-pass peut alors de manière préférentielle être intégré au tableau de l'unité de commande.

La montée en position escamotée peut alors s'effectuer préférentiellement en actionnant de manière concomitante le bouton de la commande de by-pass et le bouton de montée de la commande de l'unité de commande.

De manière encore plus préférentielle, l'actionnement concomitant des boutons de la commande de by-pass et de l'unité de commande, s'effectue avec les deux mains de l'utilisateur, chacune des mains étant dédiée à un seul bouton de commande.

Le dispositif d'attelage et de relevage d'outil comprend avantageusement un second bras s'étendant dans un plan sensiblement parallèle au plan dans lequel s'étend le premier bras, ledit bras étant articulé sur le châssis et étant doté en l'une de ses extrémités d'un second moyen d'attelage de l'outil, ainsi qu'un second vérin dont l'étendue de la course permet à l'extrémité du second bras doté du second moyen d'attelage de balayer successivement la première position dite « position basse minimale », la seconde position dite « position haute maximale » et la troisième position dite « escamotée ».

Avantageusement, un seul distributeur de fluide sous pression alimente en parallèle les premier et second vérins au moyen d'une première et d'une seconde ligne qui chacune se dédouble pour aboutir respectivement dans la chambre dont l'alimentation permet le passage depuis la position basse minimale jusqu'à la position escamotée des premier et second vérins, et dans la chambre dont l'alimentation permet le passage depuis la position escamotée jusqu'à la position basse minimale.

Selon un premier mode de réalisation, la première valve est disposée entre le dédoublement et le distributeur, de sorte que la fermeture de la valve par les moyens de détection de la position des bras aptes à désactiver les moyens d'alimentation stoppe l'alimentation des deux vérins.

Selon un mode alternatif, la première valve est disposée dans la ligne dédoublée menant à la chambre dont l'alimentation permet le passage depuis la position basse minimale jusqu'à la position escamotée du premier vérin, tandis qu'une seconde valve est disposée dans l'autre ligne dédoublée, ladite seconde valve étant pilotée par des second moyen de détection de la position de l'extrémité du second bras et son ouverture par la commande de by-pass.

L'invention a également pour objet un procédé de commande d'un dispositif d'attelage et de relevage d'outil agricole propre à être monté sur un engin agricole, le dispositif comprenant :
- un châssis destiné à être fixé sur l'engin agricole,
- au moins un premier bras articulé sur le châssis et doté en l'une de ses extrémités d'un premier moyen d'attelage de l'outil;
- au moins un premier vérin dont l'un des éléments, cylindre ou tige, est relié au châssis tandis que l'autre élément, tige ou cylindre, est relié au bras, ledit vérin permettant d'assurer le mouvement du bras de sorte que l'étendue de la course du vérin permet à l'extrémité du bras doté du moyen d'attelage, de balayer successivement une première position dite « position basse minimale », une seconde position dite « position haute maximale » et une troisième position dite « escamotée »,

- des moyens d'alimentation du vérin,
- des moyens de détection de la position de l'extrémité du bras aptes à désactiver les moyens d'alimentation du vérin,
- une commande de by-pass de la commande des moyens de détection apte à activer les moyens d'alimentation du vérin,
caractérisé en ce que les moyens de détection de la position de l'extrémité du bras désactivent les moyens d'alimentation du vérin en direction de la position escamotée, dès lors que, venant de la position basse minimale, la position haute maximale est atteinte, la réactivation des moyens d'alimentation du vérin en direction de la position escamotée s'opérant en actionnant au moins la commande de by-pass.

Avantageusement, la réactivation des moyens d'alimentation du vérin en direction de la position escamotée s'opère en actionnant parallèlement la commande des moyens d'alimentation du vérin en direction de la position escamotée.

De manière encore plus préférentielle, la réactivation des moyens d'alimentation du vérin en direction de la position escamotée s'opère en actionnant parallèlement la commande des moyens d'alimentation du vérin et la commande de by-pass, moyennant l'intervention de chacune des mains de l'utilisateur.

Les moyens d'alimentation du dispositif peuvent comprendre un distributeur hydraulique relié à chacune des chambres du premier vérin au moyen d'une ligne, ainsi qu'une première valve interposée dans la ligne connectée à la chambre dont l'alimentation permet le passage depuis la position basse minimale jusqu'à la position escamotée, et la fermeture de ladite valve intervient lorsqu'un capteur angulaire détecte que l'extrémité du bras portant les moyens d'attelage a atteint la position haute maximale ou bien lorsqu'un capteur inductif détecte que la course du vérin a atteint une valeur correspondant à la position haute maximale de l'extrémité du bras, l'ouverture de ladite valve s'opérant en actionnant la commande de by-pass, constituée préférentiellement par un interrupteur à deux positions, l'une étant instable.

Les moyens d'alimentation du dispositif peuvent comprendre un distributeur hydraulique relié à chacune des chambres du premier vérin au moyen d'une ligne, ledit distributeur étant commandé par une unité de commande déclenchant la désactivation de l'alimentation de la ligne connectée à la chambre dont l'alimentation permet le passage depuis la position basse minimale jusqu'à la position escamotée, lorsqu'elle reçoit un signal d'un capteur inductif de la course du vérin ou bien un signal d'un capteur angulaire de la position de l'extrémité du bras, l'unité de commande réenclenchant l'activation de ladite alimentation lorsque la commande de by-pass est actionnée, cette dernière étant constituée préférentiellement par un interrupteur à deux positions, l'une étant instable.

D'autres avantages et particularités de l'invention apparaîtront à la lecture de la description détaillée de mises en oeuvre et de modes de réalisation nullement limitatifs, et des dessins annexés suivants :
- la figure 1A illustre une vue de profil d'un dispositif d'attelage et de relevage en position dite « position basse minimale »,
- la figure 1B illustre une vue de profil d'un dispositif d'attelage et de relevage dans une position située entre la position dite « position basse minimale » et la position dite « position haute maximale »,
- la figure 1C illustre une vue de profil d'un dispositif d'attelage et de relevage en position dite « escamotée »,
- la figure 2 est une vue en perspective et de face trois quart d'un dispositif d'attelage et de relevage en position dite « escamotée »,
- la figure 3A est une vue schématique du dispositif suivant un premier mode de réalisation de l'invention,
- la figure 3B est une vue schématique du dispositif suivant un second mode de réalisation de l'invention,
- la figure 3C est une vue schématique du dispositif suivant un troisième mode de réalisation de l'invention,
- la figure 4 est une vue schématique du dispositif suivant un quatrième mode de réalisation de l'invention,

Les dessins annexés pourront non seulement servir à compléter l'invention, mais aussi contribuer à sa définition, le cas échéant.

Les modes de réalisation décrits ci-après étant nullement limitatifs, on pourra notamment considérer des variantes de l'invention ne comprenant qu'une sélection de caractéristiques décrites, isolées des autres caractéristiques décrites.

A des fins de concision, les mêmes éléments représentés sur des figures différentes portent une seule référence unique.

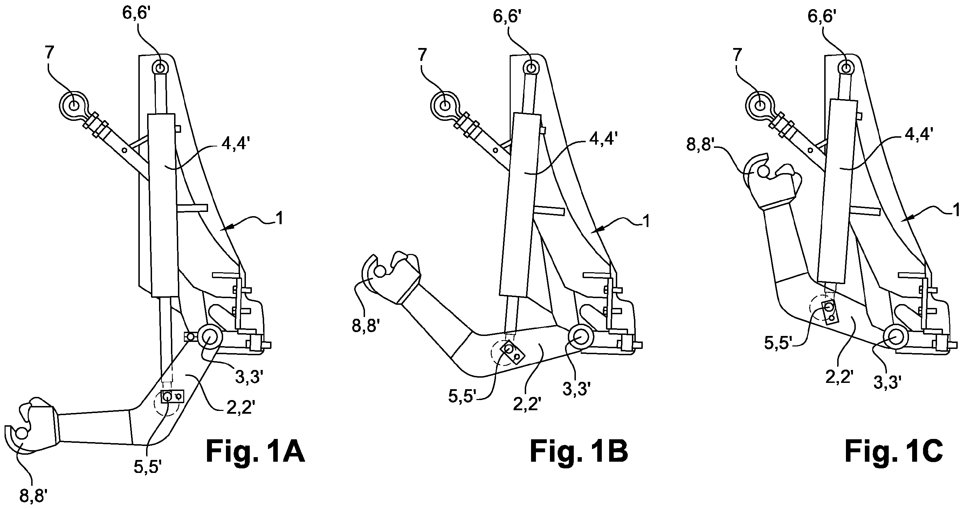

Tel que représenté sur les figures 1A à 1C, on peut voir un dispositif d'attelage et de relevage avant d'un engin agricole, tel qu'un tracteur, comprenant un châssis 1 propre à être monté fixe sur la partie avant d'un tracteur, et deux bras inférieurs d'attelage 2 et 2', s'étendant respectivement dans des plans parallèles entre eux. Chaque bras est monté pivotant autour d'un axe d'articulation 3, 3' prévu en partie basse du châssis 1. Chacun des bras est actionné par un vérin 4, 4' de sorte que la course complète du vérin permet à l'extrémité du bras portant le moyen d'attelage 8, 8', de balayer successivement des positions (voir figures 1A et 1B) allant d'une première position dite « position basse minimale », à une seconde position dite « position haute maximale » et d'outrepasser la position haute maximale pour atteindre une troisième position dite « escamotée » (voir figure 1C).

On entend par « position basse minimale » la position la plus basse admissible par les moyens d'attelage. De manière générale, les dispositifs d'attelage et de relevage admettent une position basse minimale qui permet tout simplement d'élargir la plage de choix possibles pour les positions de travail et d'attelage.

On entend par « position haute maximale » la position la plus haute admissible par les moyens d'attelage, lorsque ces derniers évoluent suivant une position de travail. En d'autres termes, la position de travail que peuvent adopter les moyens d'attelage lorsqu'ils sont raccordés à un outil, se situe nécessairement entre la position basse minimale et la position haute maximale. La position de travail correspond donc à une position intermédiaire dans laquelle, l'outil agricole attelé est à la hauteur adéquate pour exercer sa fonction.

On entend par « position escamotée », la position des moyens d'attelage, dans laquelle le bras (les) bras est (sont) replié(s) contre le châssis. Cette position va au-delà de la position haute maximale.

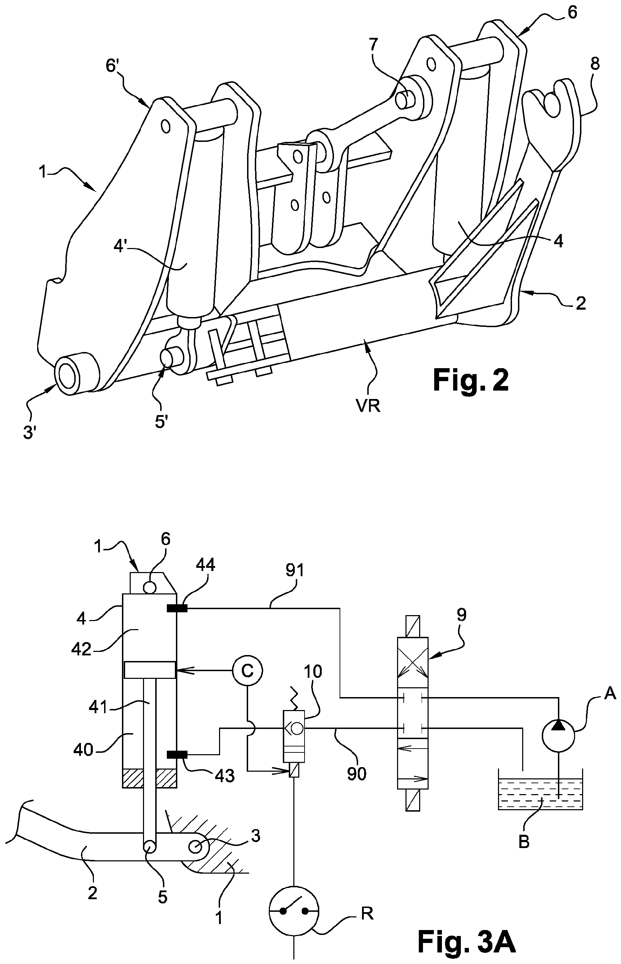

Chacun des vérins est fixé en l'un de ses composants sur le châssis et en l'autre de ses composants sur le bras qui lui est dédié. Tel que représenté sur les figures 1A, 1B, 1C et 2, les tiges des vérins 4 et 4' sont respectivement reliées aux bras 2 et 2' par des axes d'articulation 5, 5', tandis que le fût du cylindre desdits vérins est relié à la partie haute du châssis 1 par des axes d'articulation 6, 6'.

Les bras 2, 2' sont coudés, en forme d'angle obtus, avec leur convexité tournée vers le bas. La tige du vérin est fixée à la partie du bras comprise entre l'articulation 3, 3' sur le châssis et le coude du bras. Les axes d'articulation 5,5' des tiges sur les bras sont situés, dans l'exemple considéré, en avant (selon le sens normal de progression du tracteur) des axes 3,3' d'articulation des bras sur le châssis. En variante, les bras pourraient se prolonger vers l'arrière des axes 3, 3' et les tiges pourraient être reliées aux bras en arrière des axes 3,3'; dans ce cas, le dispositif serait adapté en conséquence à l'inversion de sens, la montée des bras étant obtenue par sortie de la tige, et la descente par rentrée de la tige dans son cylindre.

Un point supérieur 7 avec bielle de liaison permet de sécuriser l'outil attelé en un point d'harnachement supplémentaire.

La figure 3A représente un schéma de principe d'un dispositif d'attelage et de relevage selon un mode de réalisation de l'invention. On y retrouve un premier vérin 4 articulé côté tige autour d'un axe 5 d'un premier bras 2 et articulé côté fût du cylindre autour d'un axe 6 du châssis. Le vérin 4 est doté d'un ensemble piston-tige 41 apte à translater dans un cylindre dont l'espace est divisé en une première chambre 40 côté tige et une seconde chambre 42 côté fût du cylindre. Les premières et secondes chambres sont chacune dotées d'une ouverture 43, 44 reliée grâce à une première 90 et seconde 91 ligne, à des moyens d'alimentation 9, 10. Les ouvertures 43, 44 sont situées dans une zone correspondant au volume minimal de la chambre, de manière à permettre l'évacuation la plus complète de la chambre et donc un volume de travail optimisé.

Avantageusement, le vérin 4 est un vérin hydraulique « à double effet », alimenté par un distributeur 9 à quatre voies, lui-même alimenté par de l'huile sous pression venant du circuit du moteur de l'engin agricole. Une valve 10 est disposée dans la ligne 90 permettant l'alimentation de la chambre 40, c'est-à-dire la chambre dont le remplissage en huile mène à la position dite « escamotée ». La valve 10 est en position « ouverte » pour permettre l'alimentation de la chambre 40 lorsqu'on actionne le distributeur. En d'autres termes, la chambre 40 peut être mise à l'admission ou à l'échappement en fonction de l'état du distributeur.

Selon l'invention, le dispositif comprend des moyens de détection C capables d'identifier la position de l'extrémité du bras et de désactiver l'alimentation de la chambre 40 en obturant la valve 10, dès lors que, venant d'une position située entre la position basse minimale et la position haute maximale, la position haute maximale est dépassée. Toutefois, la valve 10 n'obture la chambre que pour l'admission et non pour l'échappement. Il faut en effet pouvoir redescendre à une position inférieure à la position haute maximale. Lorsque la ligne de la chambre dont l'alimentation permet d'accéder à la position haute maximale est mise à l'échappement, la valve est de nouveau mise en position ouverte.

Toujours selon l'invention, le dispositif comprend une commande de by-pass R capable de désactiver la commande du capteur. En d'autres termes, l'actionnement de la commande de by-pass R ouvre de nouveau la valve 10 qui obturait la ligne 90, de manière à permettre l'alimentation de la chambre 40 en vue d'atteindre la position « escamotée ».

Avantageusement, les moyens de détection C peuvent consister en un capteur inductif apte par exemple à déterminer la course du piston dans le cylindre, ledit capteur pilotant directement ou indirectement la fermeture de la valve lorsque le signal qu'il reçoit est positif.

Les moyens de détection C peuvent tout aussi avantageusement consister en un capteur angulaire apte par exemple à déterminer la variation angulaire balayée par le bras, ledit capteur pilotant directement ou indirectement la fermeture de la valve lorsque le signal reçu est positif.

La valve 10 est quant à elle avantageusement une valve unidirectionnelle dont l'obturation par les moyens C n'est réalisée qu'en direction de la chambre 40, de sorte que l'évacuation de ladite chambre est toujours possible et ne nécessite donc pas l'intervention de la commande de by-pass.

La commande de by-pass R est avantageusement un interrupteur et préférentiellement un interrupteur à deux positions, dont l'une instable.

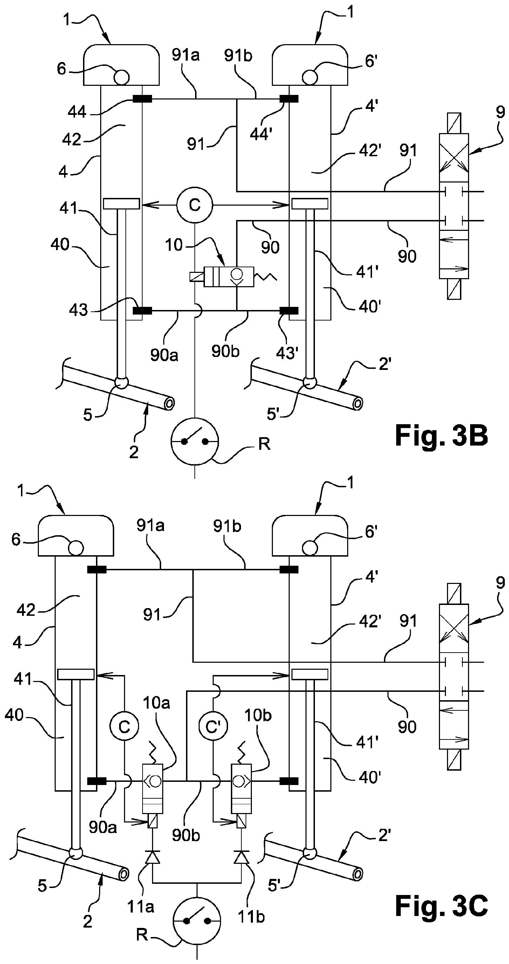

La figure 3B représente un schéma de réalisation d'un dispositif d'attelage et de relevage selon un autre mode de réalisation comprenant un premier 2 et un second 2' bras actionnés chacun par un premier 4 et un second 4' vérin. Le montage et l'articulation du second bras 2' sur le châssis 1 est similaire au montage et à l'articulation du premier bras 2. L'alimentation et l'actionnement du second vérin est également similaire à l'alimentation et à l'actionnement du second vérin.

On retrouve sur la figure 3B un premier vérin 4 articulé côté tige autour d'un axe 5 d'un premier bras 2 et articulé côté fût du cylindre autour d'un axe 6 du châssis ainsi qu'un second vérin 4' articulé côté tige autour d'un axe 5' d'un second bras 2' et articulé côté fût du cylindre autour d'un axe 6' du châssis. Les vérins 4 et 4' sont chacun dotés respectivement d'un ensemble piston-tige 41, 41' apte à translater dans un cylindre dont l'espace est divisé en une première chambre 40, 40' côté tige et une seconde chambre 42, 42' côté fût du cylindre. Les premières et secondes chambres sont chacune dotées d'une ouverture 43, 44, 43', 44' reliée grâce à une première 90a, 90b et seconde 91a, 91b ligne, à des moyens d'alimentation 9, 10. Les lignes 90a et 90b des premières chambres des deux vérins se rejoignent en une seule ligne 90 permettant ainsi l'alimentation des premières chambres sur une seule voie du distributeur 9. De même les lignes 91a et 91b des premières chambres des deux vérins se rejoignent en une seule ligne 91 permettant ainsi l'évacuation des premières chambres sur une seule voie du distributeur 9.

Selon ce mode de réalisation, il n'y a qu'une seule valve 10 disposée en amont du dédoublement de la ligne 90 en lignes 91a et 91b menant respectivement à chaque première chambre 40, 40'. La valve 10 est en position «ouverte» pour permettre l'alimentation de la chambre 40 lorsqu'on actionne le distributeur. De cette façon, l'obturation de la valve 10 désactive l'alimentation des premières chambres et stoppe la course de chaque vérin simultanément. Toujours selon l'invention, le dispositif comprend une commande de by-pass R ouvrant de nouveau la valve 10 qui obturait la ligne 90, et donc l'ensemble de l'alimentation des premier et second vérins.

Ce mode de réalisation permet aux extrémités des bras de se mouvoir de manière synchrone. De ce fait, les moyens d'attelage peuvent porter un outil de manière à ce qu'il s'étende au-dessus du sol de manière horizontale. Afin de solidariser de manière sécurisée la position des bras l'un par rapport à l'autre, une plaque de verrouillage VR (Fig.2) démontable peut les relier rigidement.

Afin d'autoriser l'oscillation latérale permettant un suivi de relief tout en portant l'outil relié au relevage au moyen des crochets d'attelage 8, 8' et du troisième point supérieur 7 avec bielle de liaison, il est nécessaire de recourir à une variante représentée en figure 3C. Pour ce faire, il est nécessaire de démonter la plaque de verrouillage VR. Cette variante diffère de la première en ce qu'une première et une seconde valves sont interposées dans chacune des lignes 90a, 90b menant respectivement à la première chambre de chacun des vérins. Chacune des valves 10a, 10b est asservie à un moyen de détection propre C, C' pouvant consister en un capteur déterminant la course du vérin ou bien la variation angulaire balayée par le bras auquel il est associé. De ce fait les fermetures des valves interviennent de manière dissociée, et plus précisément quand chacun des bras a atteint sa propre position haute maximale.

Avantageusement, des diodes 11a, 11b sont insérées pour préserver le fonctionnement indépendant des valves lors de l'atteinte de la position haute maximale. En d'autres termes, ces diodes permettent d'isoler les valves 10a, 10b l'une de l'autre, ces valves étant par ailleurs connectées à une même borne de l'interrupteur instable deux positions.

Concernant le distributeur hydraulique, ce dernier peut être piloté par une commande manuelle ou bien par une unité de commande.

Dans le cas où le distributeur 9 est commandé par une unité de commande, l'utilisateur peut piloter l'actionnement du ou des vérins depuis sa cabine, sans être obligé de descendre de son tracteur.

Le bouton d'actionnement de la commande de by-pass peut alors être intégré au tableau de bord de l'unité de commande. La montée en position escamotée s'effectue alors préférentiellement en actionnant de manière concomitante le bouton de la commande de by-pass et le bouton de montée de l'unité de commande. Pour être certain que ce double actionnement est volontaire de la part de l'utilisateur, il est avantageux de configurer le tableau de commande, de sorte que l'actionnement concomitant des boutons requière les deux mains de l'utilisateur.

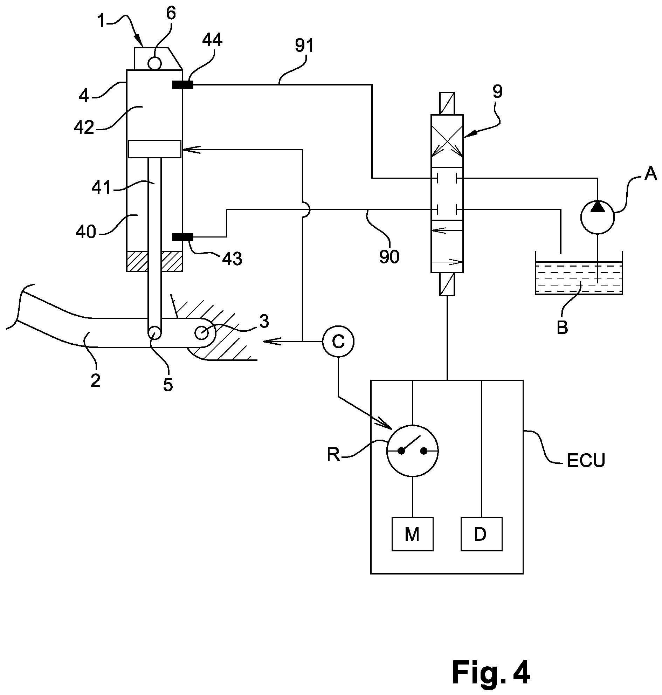

Le pilotage du distributeur par une unité de commande est détaillé en figure 4. On y retrouve un premier vérin 4 articulé côté tige autour d'un axe 5 d'un premier bras 2 et articulé côté fût du cylindre autour d'un axe 6 du châssis. Le vérin 4 est doté d'un ensemble piston-tige 41 apte à translater dans un cylindre dont l'espace est divisé en une première chambre 40 côté tige et une seconde chambre 42 côté fût du cylindre. Les premières et secondes chambres sont chacune dotées d'une ouverture 43, 44 reliée grâce à une première 90 et seconde 91 ligne, à des moyens d'alimentation 10. Les ouvertures 43, 44 sont situées dans une zone correspondant au volume minimal de la chambre, de manière à permettre l'évacuation la plus complète de la chambre et donc un volume de travail maximisé.

Avantageusement, le vérin 4 est également un vérin hydraulique « à double effet », alimenté par un distributeur 9 à quatre voies, lui-même alimenté par de l'huile sous pression venant du circuit du moteur de l'engin agricole.

Selon l'invention, le dispositif comprend des moyens de détection C capables d'identifier la position de l'extrémité du bras et de désactiver l'alimentation de la chambre 40 par l'unité de commande ECU qui actionne le distributeur en position neutre, dès lors que, venant d'une position de travail intermédiaire, la position haute maximale est dépassée.

Toujours selon l'invention, le dispositif comprend une commande de by-pass R intégrée à l'unité de commande ECU et capable de forcer la position du distributeur en position d'alimentation. En d'autres termes, l'actionnement de la commande de by-pass R concomitant à l'actionnement de l'alimentation (représentée par le bouton M) permettent d'accéder à la position escamotée.

Avantageusement, les moyens de détection C peuvent consister en un capteur inductif apte par exemple à déterminer la course du piston dans le cylindre, ledit capteur pilotant directement ou indirectement la fermeture de la valve lorsque le signal qu'il reçoit est positif.

Les moyens de détection C peuvent tout aussi avantageusement consister en un capteur angulaire apte par exemple à déterminer la variation angulaire balayée par le bras, ledit capteur pilotant directement ou indirectement la fermeture de la valve lorsque le signal reçu est positif. On notera alors que cette configuration permet de ne pas recourir nécessairement à une unité de commande (ECU).

La commande de by-pass R est avantageusement un interrupteur et préférentiellement un interrupteur à deux positions, l'une d'elles étant instable.

Comme il apparaît clairement sur la figure 4, il n'est plus nécessaire de recourir à une valve pilotée par le capteur comme dans les modes précédents. En revanche, il est nécessaire de procéder préalablement à une étape de calibrage. Dans ce cas, le capteur est capable de lire la course complète du relevage. Dans ce cas encore, la course maximum autorisée et correspondant à la position haute maximale, est définie comme étant une fraction de la course complète. Le fonctionnement, y compris en mode manuel, est alors subordonné à la phase de calibrage.

Lors de la phase de calibrage, le vérin est actionné à la montée et à la descente jusqu'aux positions dites « escamotée » et « basse minimale ». Cette étape permet de valider la plage utile du capteur, ladite plage étant alors limitée vers le haut pour une course correspondant à la position haute maximum, soit par exemple 80% de la course totale qui, elle, correspond à la position escamotée. Bien entendu, lorsque la valeur du capteur, correspondant à la position haute maximale, est atteinte, le distributeur se configure en position neutre et la course du relevage est stoppée.

L'avantage de ce mode de réalisation est qu'il permet une gestion proportionnelle de l'ouverture du distributeur, ladite gestion proportionnelle permettant un fonctionnement souple en fin de course.

Pour accéder à la position escamotée, il convient alors d'actionner la commande de by-pass qui permet d'activer l'ouverture du distributeur au-delà de la position haute maximale tout en actionnant de façon simultanée et continue, la commande d'alimentation du distributeur.

Cette course entre la position haute maximale et la position escamotée peut être obtenue avec une ouverture du distributeur d'alimentation différente de celle utilisée pour l'obtention des positions de travail intermédiaires, et ce, afin de contrôler la vitesse de passage en position escamotée.

A titre de variante, il peut être envisagé d'utiliser deux capteurs plutôt qu'un afin de sécuriser davantage le dispositif. En effet, dans le cas où l'un des capteurs viendrait à se dérégler ou bien serait hors d'usage (lecture défaillante des inputs ou bien comportement décalée ou aléatoire par rapport aux données de références stockée), seul le comportement du capteur resté cohérent sera pris en compte.

Dans le cas où le dispositif d'attelage et de relevage est doté d'un dispositif d'oscillation tel que décrit dans le document FR2649580, ce dispositif permet de faire monter et descendre les deux bras selon des courses différentes. Toutefois, comme le distributeur est commun à l'alimentation des vérins de chaque bras, l'atteinte de la position haute maximale par l'un des bras vaut pour l'autre, même si la position haute maximale de l'autre bras n'est pas atteinte. En effet, l'alimentation du distributeur est désactivée pour les deux bras.

Pour pallier cet inconvénient, il est possible de réintroduire une valve pilotée pour chaque vérin.

Il est aussi possible, d'introduire un second distributeur, de sorte qu'il y ait un distributeur dédié à chaque vérin, chacun des distributeurs possédant sa propre gestion. Toutefois, cette variante est assez coûteuse et il convient d'assurer une synchronisation permanente des débits des deux distributeurs d'alimentation en parallèle pour permettre un fonctionnement dynamique sans dérive latérale de la hauteur de l'outil soulevé.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

Ainsi, le dispositif d'attelage et de relevage pourrait par exemple comporter une unité de commande à l'intérieur de la cabine de l'engin permettant à l'utilisateur d'actionner le dispositif entre la position basse minimum et la position haute maximum depuis sa cabine, et des commandes manuelles extérieures dédiées alors au pilotage du dispositif entre la position haute maximale et la position escamotée.

De même, le dispositif d'attelage et de relevage pourrait par exemple comporter deux bras actionnés par un seul et même vérin.

## Revendications

1. Dispositif d'attelage et de relevage d'un outil, propre à être monté sur un engin agricole, comprenant :
- un châssis (1) destiné à être fixé sur l'engin agricole,
- au moins un premier bras (2) articulé sur le châssis et comportant en l'une de ses extrémités un premier moyen d'attelage (8) de l'outil;
- au moins un premier vérin (4) dont l'un des éléments, cylindre ou tige, est relié au châssis tandis que l'autre élément, tige ou cylindre, est relié au bras, ledit vérin permettant d'assurer le mouvement du bras de sorte que l'étendue de la course du vérin permet à l'extrémité du premier bras dotée du premier moyen d'attelage, de balayer successivement une première position dite « position basse minimale », une seconde position dite « position haute maximale » et une troisième position dite « escamotée »,
- des moyens d'alimentation (9, 10, 10a, 10b) du vérin,
- des premiers moyens de détection (C) de la position de l'extrémité du bras aptes à désactiver les moyens d'alimentation du vérin, lorsque l'extrémité du bras a atteint la seconde position, **caractérisé en ce qu'**il comprend en outre une commande de by-pass (R) de la commande des moyens de détection apte à activer les moyens d'alimentation du vérin.

2. Dispositif d'attelage et de relevage d'outil agricole, selon la revendication 1, **caractérisé en ce que** les moyens de détection de la position de l'extrémité du bras comprennent un capteur inductif.

3. Dispositif d'attelage et de relevage d'outil agricole, selon la revendication 1, **caractérisé en ce que** les moyens de détection de la position de l'extrémité du bras comprennent un capteur de position angulaire.

4. Dispositif d'attelage et de relevage d'outil agricole, selon l'une quelconques des revendications précédentes, **caractérisé en ce que** la commande de by-pass (R) est un interrupteur à deux positions, dont l'une instable.

5. Dispositif d'attelage et de relevage d'outil agricole, selon l'une quelconques des revendications précédentes, **caractérisé en ce que** les moyens d'alimentation comprennent un distributeur hydraulique (9) relié à chacune des chambres (40, 42) du premier vérin au moyen d'une ligne (90, 91), ainsi qu'une première valve (10, 10a) interposée dans la ligne connectée à la chambre (40) dont l'alimentation permet le passage depuis la position d'attelage jusqu'à la position escamotée, la fermeture de ladite valve étant pilotée par les moyen de détection de la position de l'extrémité du bras et son ouverture par la commande de by-pass.

6. Dispositif d'attelage et de relevage d'outil agricole, selon l'une quelconques des revendications 1 à 5, **caractérisé en ce que** les moyens d'alimentation comprennent un distributeur hydraulique (9) relié à chacune des chambres (40, 42) du premier vérin au moyen d'une ligne (90, 91), ledit distributeur étant commandé par une unité (ECU) reliée aux moyens de détection et à la commande de by-pass.

7. Dispositif d'attelage et de relevage d'outil agricole, selon la revendication 6, **caractérisé en ce que** le bouton d'actionnement de la commande de by-pass est intégré au tableau de l'unité de commande.

8. Dispositif d'attelage et de relevage d'outil agricole, selon l'une des revendications 6 ou 7, **caractérisé en ce que** la montée en position escamotée s'effectue en actionnant de manière concomitante le bouton de la commande de by-pass et le bouton de montée de la commande manuelle du distributeur ou de l'unité de commande.

9. Dispositif d'attelage et de relevage d'outil selon l'une quelconque des revendications précédentes, **caractérisé en ce qu'**il comprend un second bras (2') s'étendant dans un plan sensiblement parallèle au plan dans lequel s'étend le premier bras, ledit second bras étant articulé sur le châssis et comportant en l'une de ses extrémités un second moyen d'attelage de l'outil (8'), ainsi qu'un second vérin (4') dont l'étendue de la course permet à l'extrémité du second bras dotée du second moyen d'attelage de balayer successivement la première position dite « position basse minimale », la seconde position dite « position haute maximale » et la troisième position dite « escamotée ».

10. Dispositif d'attelage et de relevage d'outil selon la revendication 9, **caractérisé en ce qu'**un seul distributeur de fluide sous pression alimente en parallèle les premier et second vérins au moyen d'une première et d'une seconde ligne se dédoublant chacune pour aboutir respectivement dans la chambre dont l'alimentation permet le passage depuis la position d'attelage jusqu'à la position escamotée des premier et second vérins, et dans la chambre dont l'alimentation permet le passage depuis la position escamotée jusqu'à la position d'attelage.

11. Dispositif selon la revendication 10 en combinaison avec la revendication 5, **caractérisé en ce que** la première valve (10) est disposée entre le dédoublement et le distributeur, de sorte que la fermeture de la valve par moyens de détection de la position de l'extrémité du bras stoppe l'alimentation des deux vérins.

12. Dispositif selon la revendication 10 en combinaison avec la revendication 5, **caractérisé en ce que** la première valve (10a) est disposée dans la ligne dédoublée menant à la chambre dont l'alimentation permet le passage depuis la position d'attelage jusqu'à la position escamotée du premier vérin, tandis qu'une seconde valve (10b) est disposée dans l'autre ligne dédoublée, ladite seconde valve étant pilotée par des second moyen (C') de détection de la position de l'extrémité du second bras et son ouverture par la commande de by-pass.

13. Procédé de commande d'un dispositif d'attelage et de relevage d'outil, le dispositif étant propre à être monté sur un engin agricole et comprenant :
- un châssis (1) destiné à être fixé sur l'engin agricole,
- au moins un premier bras (2) articulé sur le châssis et comportant en l'une de ses extrémités un premier moyen d'attelage (8) de l'outil;
- au moins un premier vérin (4) dont l'un des éléments, cylindre ou tige, est relié au châssis tandis que l'autre élément, tige ou cylindre, est relié au bras, ledit vérin permettant d'assurer le mouvement du bras de sorte que l'étendue de la course du vérin permet à l'extrémité du bras portant le moyen d'attelage, de balayer successivement une première position dite « position basse minimale », une seconde position dite « position haute maximale » et une troisième position dite « escamotée »,
- des moyens d'alimentation (9, 10) du vérin,
- des premiers moyens de détection (C) de la position de l'extrémité du bras aptes à désactiver les moyens d'alimentation du vérin,
- une commande de by-pass (R) de la commande des moyens de détection apte à activer les moyens d'alimentation du vérin,
**caractérisé en ce que** les premiers moyens de détection de la position de l'extrémité du premier bras désactivent les moyens d'alimentation du vérin en direction de la position escamotée, dès lors que, venant de la position d'attelage, la position haute maximale est atteinte, la réactivation des moyens d'alimentation du vérin en direction de la position escamotée s'opérant en actionnant au moins la commande de by-pass.

14. Procédé de commande selon la revendication 13, **caractérisé en ce que** la réactivation des moyens d'alimentation du vérin en direction de la position escamotée s'opère en actionnant de manière concomitante la commande des moyens d'alimentation du vérin en direction de la position escamotée et la commande de by-pass.

15. Procédé de commande selon la revendication 13 ou 14, dans lequel les moyens d'alimentation du dispositif comprennent un distributeur hydraulique (9) relié à chacune des chambres (40, 42) du premier vérin au moyen d'une ligne (90, 91), ainsi qu'une première valve (10, 10a) interposée dans la ligne connectée à la chambre dont l'alimentation permet le passage depuis la position d'attelage jusqu'à la position escamotée, **caractérisé en ce que** la fermeture de ladite valve intervient lorsqu'un capteur angulaire, constituant les moyens de détection, détecte que l'extrémité du bras portant les moyens d'attelage a atteint la position haute maximale ou bien lorsqu'un capteur inductif, constituant les moyens de détection, détecte que la course du vérin a atteint une valeur calibrée comme étant la position haute maximale de l'extrémité du bras, l'ouverture de ladite valve s'opérant en actionnant la commande de by-pass, constituée préférentiellement par un interrupteur à deux positions, l'une étant instable.

16. Procédé de commande selon la revendication 13 ou 14, dans lequel les moyens d'alimentation du dispositif comprennent un distributeur hydraulique (9) relié à chacune des chambres (40, 42) du premier vérin au moyen d'une ligne (90, 91), ledit distributeur étant commandé par une unité (ECU), **caractérisé en ce que** l'unité (ECU) commande la désactivation de l'alimentation par le distributeur de la ligne connectée à la chambre dont l'alimentation permet le passage depuis la position d'attelage jusqu'à la position escamotée, lorsqu'elle reçoit un signal d'un capteur inductif de la course du vérin ou bien un signal d'un capteur angulaire de la position de l'extrémité du bras, lesdits capteurs constituant les moyens de détection, et l'activation de ladite alimentation s'effectuant en actionnant simultanément la commande de by-pass, préférentiellement intégrée au tableau de commande de l'unité (ECU), et le bouton d'alimentation du vérin en direction de la position escamotée.

## Patentansprüche

1. Vorrichtung zum Ankoppeln und Anheben eines Werkzeugs, die zum Anbringen an einem landwirtschaftlichen Gerät geeignet ist, mit:
- einem Gestell (1), das zum Befestigen an dem landwirtschaftlichen Gerät vorgesehen ist,
- mindestens einem ersten Arm (2), der an dem Gestell angelenkt ist und an einem seiner Enden eine erste Werkzeugankopplungseinrichtung (8) aufweist,
- mindestens einem ersten Zylinder (4), wobei eines der Elemente desselben, die Zylinderbuchse oder die Stange, mit dem Gestell verbunden ist, während das andere Element, die Stange oder die Zylinderbuchse, mit dem Arm verbunden ist, wobei der Zylinder das Bewegen des Arms derart ermöglicht, dass die Erstreckung des Zylinderhubs dem mit der ersten Ankopplungseinrichtung versehenen Ende des ersten Arms ermöglicht, nacheinander eine als "minimale untere Position" bezeichnete erste Position, eine als "maximale obere Position" bezeichnete zweite Position und eine als "eingefahren" bezeichnete dritte Position zu durchfahren,
- Versorgungseinrichtungen (9, 10, 10a, 10b) des Zylinders,
- ersten Einrichtungen (C) zum Erkennen der Position des Armendes, welche in der Lage sind, die Versorgungseinrichtungen des Zylinders zu deaktivieren, wenn das Ende des Arms die zweite Position erreicht,
**dadurch gekennzeichnet, dass**
sie ferner eine Bypass-Steuerung (R) der Steuerung der Erkennungseinrichtungen aufweist, die geeignet ist, die Versorgungseinrichtungen des Zylinders zu aktivieren.

2. Vorrichtung zum Ankoppeln und Anheben eines landwirtschaftlichen Werkzeugs nach Anspruch 1, **dadurch gekennzeichnet, dass** die Einrichtungen zum Erkennen der Position des Armendes einen induktiven Sensor aufweisen.

3. Vorrichtung zum Ankoppeln und Anheben eines landwirtschaftlichen Werkzeugs nach Anspruch 1, **dadurch gekennzeichnet, dass** die Einrichtungen zum Erkennen der Position des Armendes einen Winkelpositionssensor aufweisen.

4. Vorrichtung zum Ankoppeln und Anheben eines landwirtschaftlichen Werkzeugs nach einem der vorhergehenden Ansprüche, **dadurch gekennzeichnet, dass** die Bypass-Steuerung (R) ein Schalter mit zwei Positionen ist, von denen eine instabil ist.

5. Vorrichtung zum Ankoppeln und Anheben eines landwirtschaftlichen Werkzeugs nach einem der vorhergehenden Ansprüche, **dadurch gekennzeichnet, dass** die Versorgungseinrichtungen einen hydraulischen Verteiler (9), der mit jeder der Kammern (40, 42) des ersten Zylinders mittels einer Leitung (90, 91) verbunden ist, sowie ein erstes Ventil (10, 10a) aufweisen, das in der Leitung angeordnet ist, die mit der Kammer (40) verbunden ist, deren Versorgung den Übergang von der Ankopplungsposition zu der eingefahrenen Position ermöglicht, wobei das Schließen des Ventils durch die Einrichtungen zum Erkennen der Position des Armendes und das Öffnen desselben durch die Bypass-Steuerung gesteuert ist.

6. Vorrichtung zum Ankoppeln und Anheben eines landwirtschaftlichen Werkzeugs nach einem der vorhergehenden Ansprüche 1 bis 5, **dadurch gekennzeichnet, dass** die Versorgungseinrichtungen einen hydraulischen Verteiler (9) aufweisen, der mit jeder der Kammern (40, 42) des ersten Zylinders mittels einer Leitung (90, 91) verbunden ist, wobei der Verteiler durch eine Einheit (ECU) gesteuert ist, die mit den Erkennungseinrichtungen und der Bypass-Steuerung verbunden ist.

7. Vorrichtung zum Ankoppeln und Anheben eines landwirtschaftlichen Werkzeugs nach Anspruch 6, **dadurch gekennzeichnet, dass** der Betätigungsknopf der Bypass-Steuerung in der Schalttafel der Steuereinheit integriert ist.

8. Vorrichtung zum Ankoppeln und Anheben eines landwirtschaftlichen Werkzeugs nach einem der Ansprüche 6 oder 7, **dadurch gekennzeichnet, dass** Anheben in die eingefahrene Position durch das gleichzeitige Betätigen des Bypass-Steuerknopfs und des Anhebeknopfs der manuellen Steuerung des Verteilers oder der Steuereinheit erfolgt.

9. Vorrichtung zum Ankoppeln und Anheben eines landwirtschaftlichen Werkzeugs nach einem der vorhergehenden Ansprüche, **dadurch gekennzeichnet, dass** sie einen zweiten Arm (2') aufweist, der sich in einer Ebene erstreckt, die im Wesentlichen parallel zu der Ebene verläuft, in welcher sich der erste Arm erstreckt, wobei der zweite Arm an dem Gestell angelenkt ist und an einem seiner Enden eine zweite Werkzeugankopplungseinrichtung (8') sowie einen zweiten Zylinder (4') aufweist, dessen Zylinderhuberstreckung dem mit der zweiten Ankopplungseinrichtung versehenen Ende des zweiten Arms ermöglicht, nacheinander eine als "minimale untere Position" bezeichnete erste Position, eine als "maximale obere Position" bezeichnete zweite Position und eine als "eingefahren" bezeichnete dritte Position zu durchfahren.

10. Vorrichtung zum Ankoppeln und Anheben eines landwirtschaftlichen Werkzeugs nach Anspruch 9, **dadurch gekennzeichnet, dass** ein einzelner Druckfluidverteiler den ersten und den zweiten Zylinder über eine erste und eine zweite Leitung parallel versorgt, die sich jeweils teilen, zum jeweils in der Kammer zu münden, deren Versorgung den Übergang von der Ankopplungsposition zu der eingefahrenen Position des ersten und des zweiten Zylinders ermöglicht, und deren Versorgung den Übergang von der eingefahrenen Position zu der Ankopplungsposition ermöglicht.

11. Vorrichtung nach Anspruch 10 in Kombination mit Anspruch 5, **dadurch gekennzeichnet, dass** das erste Ventil (10) zwischen der Teilung und dem Verteiler derart angeordnet ist, dass das Schließen des Ventils durch die Einrichtungen zum Erkennen der Position des Armendes die Versorgung der beiden Zylinder stoppt.

12. Vorrichtung nach Anspruch 10 in Kombination mit Anspruch 5, **dadurch gekennzeichnet, dass** das erste Ventil (10a) in der geteilten Leitung angeordnet ist, die zu der Kammer führt, deren Versorgung den Übergang von der Ankopplungsposition zu der eingefahrenen Position des ersten Zylinders ermöglicht, während ein zweites Ventil (10b) in der anderen geteilten Leitung angeordnet ist, wobei das zweite Ventil durch zweite Einrichtungen (C') zur Erkennung der Position des Endes des zweiten Arms und sein Öffnen durch die Bypass-Steuerung gesteuert ist.

13. Verfahren zum Steuern einer Vorrichtung zum Ankoppeln und anheben eines Werkzeugs, wobei die Vorrichtung zur Montage an einer landwirtschaftlichen Maschine geeignet ist und aufweist:
- ein Gestell (1), das zum Befestigen an dem landwirtschaftlichen Gerät vorgesehen ist,
- mindestens einen ersten Arm (2), der an dem Gestell angelenkt ist und an einem seiner Enden eine erste Werkzeugankopplungseinrichtung (8) aufweist,
- mindestens einen ersten Zylinder (4), wobei eines der Elemente desselben, die Zylinderbuchse oder die Stange, mit dem Gestell verbunden ist, während das andere Element, die Stange oder die Zylinderbuchse, mit dem Arm verbunden ist, wobei der Zylinder das Bewegen des Arms derart ermöglicht, dass die Erstreckung des Zylinderhubs dem mit der ersten Ankopplungseinrichtung versehenen Ende des ersten Arms ermöglicht, nacheinander eine als "minimale untere Position" bezeichnete erste Position, eine als "maximale obere Position" bezeichnete zweite Position und eine als "eingefahren" bezeichnete dritte Position zu durchfahren,
- Versorgungseinrichtungen (9, 10, 10a, 10b) des Zylinders,
- erste Einrichtungen (C) zum Erkennen der Position des Armendes, welche in der Lage sind, die Versorgungseinrichtungen des Zylinders zu deaktivieren, wenn das Ende des Arms die zweite Position erreicht,
- eine Bypass-Steuerung (R) der Steuerung der Erkennungseinrichtungen aufweist, die geeignet ist, die Versorgungseinrichtungen des Zylinders zu aktivieren,
**dadurch gekennzeichnet, dass** die ersten Einrichtungen zur Erkennung der Position des Endes des ersten Armes die Versorgungseinrichtungen des Zylinders in Richtung der eingefahrenen Position deaktivieren, sobald, von der Ankopplungsposition ausgehend, die maximale obere Position erreicht ist, wobei die Reaktivierung der Versorgungseinrichtungen des Zylinders in Richtung der eingefahrenen Position durch Betätigen zumindest der Bypass-Steuerung erfolgt.

14. Verfahren zum Steuern einer Vorrichtung nach Anspruch 13, **dadurch gekennzeichnet, dass** die Reaktivierung der Versorgungseinrichtungen des Zylinders in Richtung der eingefahrenen Position durch gleichzeitiges Betätigen der Versorgungseinrichtungen des Zylinders in Richtung der eingefahrenen Position und der Bypass-Steuerung erfolgt.

15. Verfahren zum Steuern einer Vorrichtung nach Anspruch 13 oder 14, **dadurch gekennzeichnet, dass** die Versorgungseinrichtungen der Vorrichtung einen hydraulischen Verteiler (9), der mit jeder der Kammern (40, 42) des ersten Zylinders mittels einer Leitung (90, 91) verbunden ist, sowie ein erstes Ventil (10, 10a) aufweisen, das in der Leitung angeordnet ist, die mit der Kammer (40) verbunden ist, deren Versorgung den Übergang von der Ankopplungsposition zu der eingefahrenen Position ermöglicht, **dadurch gekennzeichnet, dass** das Schließen des Ventils erfolgt, wenn ein Winkelsensor, welcher die Erkennungseinrichtungen bildet, erkennt, dass das Ende des Arms, das die Ankopplungseinrichtungen trägt, die maximale obere Position erreicht hat, oder wenn ein induktiver Sensor, der die Erkennungseinrichtungen bildet, erkennt, dass der Zylinderhub einen Wert erreicht hat, der als die maximale obere Position des Armendes kalibriert ist, wobei das Öffnen des Ventils durch Betätigen der Bypass-Steuerung erfolgt, die vorzugsweise durch einen Schalter mit zwei Positionen gebildet ist, von denen eine instabil ist.

16. Verfahren zum Steuern einer Vorrichtung nach Anspruch 13 oder 14, **dadurch gekennzeichnet, dass** die Versorgungseinrichtungen der Vorrichtung einen hydraulischen Verteiler (9), der mit jeder der Kammern (40, 42) des ersten Zylinders mittels einer Leitung (90, 91) verbunden ist, wobei der Verteiler durch eine Einheit (ECU) gesteuert wird, **dadurch gekennzeichnet, dass** die Einheit (ECU) die Deaktivierung der durch den Verteiler erfolgenden Versorgung der Leitung steuert, die mit der der Kammer verbunden ist, deren Versorgung den Übergang von der Ankopplungsposition zu der eingefahrenen Position ermöglicht, wenn sie ein Signal eines induktiven Sensors bezüglich des Zylinderhubs oder ein Signal eines Winkelsensors bezüglich der Position des Armendes empfängt, wobei die Sensoren Erkennungseinrichtungen bilden, und wobei die Aktivierung der genannten Versorgung durch gleichzeitiges Betätigen der Bypass-Steuerung, die vorzugsweise in die Steuertafel der Einheit (ECU) integriert ist, und des Knopfs zur Versorgung des Zylinders in Richtung der eingefahrenen Position erfolgt.

## Claims

1. A device for hitching and lifting a tool, capable of being mounted to an agricultural machine, comprising:
- a chassis (1) intended to be attached to the agricultural machine,
- at least one first arm (2) hinged to the chassis and including at one of the ends thereof a first means (8) for hitching the tool;
- at least one first actuator (4) one of the elements, cylinder or rod, of which is connected to the chassis whereas the other element, rod or cylinder, is connected to the arm, said actuator enabling the movement of the arm to be ensured such that the actuator stroke extent enables the end of the first arm provided with the first hitching means, to successively sweep across a first position called a "minimum bottom position", a second position called a "maximum top position" and a third position called a "retracted" position,
- means (9, 10, 10a, 10b) for supplying the actuator,
- first means (C) for detecting the position of the end of the arm which are able to deactivate the means for supplying the actuator, when the end of the arm has reached the second position, **characterised in that** said device comprises furthermore a by-pass control (R) for controlling the detecting means able to activate the means for supplying the actuator.

2. The device for hitching and lifting an agricultural tool, according to claim 1, **characterised in that** the means for detecting the position of the end of the arm include an induction sensor.

3. The device for hitching and lifting an agricultural tool, according to claim 1, **characterised in that** the means for detecting the position of the end of the arm comprise an angular position sensor.

4. The device for hitching and lifting an agricultural tool according to any of the preceding claims, **characterised in that** the by-pass control (R) is a switch with two positions, one of which is unstable.

5. The device for hitching and lifting an agricultural tool according to any of the preceding claims, **characterised in that** the supply means comprise a hydraulic distributor (9) connected to each of the chambers (40, 42) of the first actuator using a line (90, 91), as well as a first valve (10, 10a) interposed in the line connected to the chamber (40) the supply of which allows switching from the hitching position toward the retracted position, closing said valve being driven by the means for detecting the position of the end of the arm and its opening by the by-pass control.

6. The device for hitching and lifting an agricultural tool according to any of the preceding claims 1 to 5, **characterised in that** the supply means comprise a hydraulic distributor (9) connected to each of the chambers (40, 42) of the first actuator by means of a line (90, 91), said distributor being controlled by a unit (ECU) connected to the detecting means and the by-pass control.

7. The device for hitching and lifting an agricultural tool, according to claim 6, **characterised in that** the actuating knob of the by-pass control is integrated to the board of the control unit.

8. The device for hitching and lifting an agricultural tool according to one of claims 6 and 7, **characterised in that** the raise to the retracted position is made by concomitantly actuating the knob of the by-pass control and the raise knob of the manual control of the distributor or of the control unit.

9. The device for hitching and lifting a tool according to any of the preceding claims, **characterised in that** it comprises a second arm (2') extending in a plane substantially parallel to the plane in which the first arm extends, said second arm being hinged to the chassis and including at one end thereof a second means for hitching the tool (8'), as well as a second actuator (4') the stroke extent of which enables the end of the second arm provided with the second hitching means to successively sweep across the first position called the "minimum bottom position", the second position called the "maximum top position" and the third position called the "retracted" position.

10. The device for hitching and lifting a tool according to claim 9, **characterised in that** a single pressurised fluid distributor supplies the first and second actuators in parallel by means of a first and a second line each being divided in two to end respectively in the chamber the supply of which enables switching from the hitching position to the retracted position of the first and second actuators, and in the chamber the supply of which enables switching from the retracted position to the hitching position.

11. The device according to claim 10 in combination with claim 5, **characterised in that** the first valve (10) is disposed between the division in two and the distributor, such that closing the valve by the means for detecting the position of the end of the arm stops the supply to both actuators.

12. The device according to claim 10 in combination with claim 5, **characterised in that** the first valve (10a) is disposed in the line divided in two leading to the chamber the supply of which enables switching from the hitching position to the retracted position of the first actuator, whereas a second valve (10b) is disposed in the other line divided in two, said second valve being driven by second means (C') for detecting the position of the end of the second arm and its opening by the by-pass control.

13. A method for controlling a device for hitching and lifting a tool, the device being capable of being mounted to an agricultural machine and comprising:
- a chassis (1) intended to be attached to the agricultural machine,
- at least one first arm (2) hinged to the chassis and including at one of the ends thereof a first means (8) for hitching the tool;
- at least one first actuator (4) one of the elements, cylinder or rod, of which is connected to the chassis whereas the other element, rod or cylinder, is connected to the arm, said actuator enabling the movement of the arm to be ensured such that the actuator stroke extent enables the end of the first arm provided with the first hitching means, to successively sweep across a first position called a "minimum bottom position", a second position called a "maximum top position" and a third position called a "retracted" position,
- means (9, 10) for supplying the actuator,
- first means (C) for detecting the position of the end of the arm which are able to deactivate the means for supplying the actuator,
- a by-pass control (R) for controlling the detecting means able to activate the means for supplying the actuator,
**characterised in that** the first means for detecting the position of the end of the first arm deactivate the means for supplying the actuator in the direction of the retracted position, as soon as, coming from the hitching position, the maximum top position is reached, reactivating the means for supplying the actuator in the direction of the retracted position being operated by actuating at least the by-pass control.

14. The control method according to claim 13, **characterised in that** reactivating the means for supplying the actuator in the direction of the retracted position is operated by concomitantly actuating the control of the means for supplying the actuator in the direction of the retracted position and the by-pass control.

15. The control method according to claim 13 or 14, wherein the means for supplying the device comprise a hydraulic distributor (9) connected to each of the chambers (40, 42) of the first actuator by means of a line (90, 91), as well as a first valve (10, 10a) interposed in the line connected to the chamber the supply of which enables switching from the hitching position to the retracted position, **characterised in that** closing said valve occurs when an angular sensor, making the detecting means, detects that the end of the arm carrying the hitching means has reached the maximum top position or when an induction sensor, making the detecting means, detects that the actuator stroke has reached a calibrated value as being the maximum top position of the end of the arm, opening said valve being operated by actuating the by-pass control, preferentially made by a switch with two positions, one of which is unstable.

16. The control method according to claim 13 or 14, wherein the means for supplying the device comprise a hydraulic distributor (9) connected to each of the chambers (40, 42) of the first actuator by means of a line (90, 91), said distributor being controlled by a unit (ECU), **characterised in that** the unit (ECU) controls deactivating the supply by the distributor of the line connected to the chamber the supply of which enables switching from the hitching position to the retracted position, when it receives a signal from an induction sensor about the actuator stroke or a signal from an angular sensor about the position of the end of the arm, said sensors making the detecting means, and activating said supply being made by simultaneously actuating the by-pass control, preferentially integrated to the control board of the unit (ECU), and the supply knob of the actuator in the direction of the retracted position.
